# EUROPÄISCHE PATENTSCHRIFT

(11) **EP 1 169 154 B1**
(45) Veröffentlichungstag und Bekanntmachung des Hinweises auf die Patenterteilung: **18.06.2003**
(21) Anmeldenummer: 00926917.6
(22) Anmeldetag: 13.04.2000
(51) Int. Cl.: B23B 29/04, B23D 77/04, B23Q 1/34

(54) **PIEZOELEKTRISCHER EINSTELLMECHANISMUS**
PIEZOELECTRIC ADJUSTING MECHANISM
MECANISME D'AJUSTAGE PIEZO-ELECTRIQUE

(30) Priorität: 14.04.1999 DE 19925193
(43) Veröffentlichungstag der Anmeldung: 09.01.2002
(73) Patentinhaber: Gühring, Jörg, Dr., 72458 Albstadt (DE)
(72) Erfinder: CSELLE, Tibor, D-72488 Sigmaringen (DE)
(74) Vertreter: Winter, Brandl,&Fürniss, Hübner Röss, Kaiser, Polte Partnerschaft
(86) Internationale Anmeldenummer: EP0003344
(87) Internationale Veröffentlichungsnummer: WO00062962

(56) Entgegenhaltungen:
- FR-A- 2 664 201
- US-A- 3 434 375

## Beschreibung

Die vorliegende Erfindung betrifft einen piezoelektrischen Einstellmechanismus zum Verstellen eines Schneidelements eines Werkzeugs gemäß dem Oberbegriff des Patentanspruchs 1 sowie Werkzeuge mit einem derartigen piezoelektrischen Einstellmechanismus gemäß den Oberbegriffen der Patentansprüche 7 und 10.

Piezoelektrische Kristalle weisen bekanntlich eine hohe Eigensteifigkeit auf, sind kommerziell käuflich und darüber hinaus äußerst robust. Sie finden daher Anwendung in elektromechanischen Systemen zur Einstellung von Werkzeugschneiden. Ein Werkzeug mit einem derartigen piezoelektrischen Werkzeugschneideneinstellsystem benötigt keine empfindlichen, mechanischen Miniaturbauteile, wie z.B. kleine Einstellschrauben, die von der das Werkzeug einstellenden Person eine besondere Fingerfertigkeit abverlangen. Die Einstellung kann vielmehr mittels einer einfachen digitalen Tastatur vorgenommen werden.

So wird beispielsweise in der deutschen Offenlegungsschrift DE-3509240 ein piezoelektrischer Einstellmechanismus gemäß dem Oberbegriff des Patentanspruchs 1 bzw. ein Werkzeug mit einem derartigen Einstellmechanismus gemäß dem Oberbegriff des Patentanspruchs 7 beschrieben. DE-3509240 bezieht sich im besonderen auf eine Antriebseinrichtung, die zumindest einen piezoelektrischen Kristall umfaßt. Dieser piezoelektrische Kristall stützt sich an einer Seite an einem Widerlager ab, das an einer Werkzeugmaschine vorgesehen ist. An der anderen Seite des piezoelektrischen Kristalls ist eine Werkzeugschneide mittels einer Halterung befestigt. Bei Anlegen einer elektrischen Spannung an den piezoelektrischen Kristall wird durch dessen Elektrostriktion, d.h. dessen elastische Deformation in dem durch die elektrische Spannung geschaffenen elektrischen Feld, eine Änderung des Abstandes zwischen der Werkzeugschneide und dem Widerlager erzeugt.

Die deutsche Offenlegungsschrift DE-4401496 offenbart ferner eine Werkzeugschneiden-Verstelleinrichtung gemäß dem Oberbegriff des Patentanspruchs 10, zum hochgenauen Bearbeiten von runden, unrunden und/oder nicht zylinderförmigen Innen- und/oder Aussenkonturen, wobei entweder ein Werkzeug gegenüber einem Werkstück oder aber das Werkstück gegenüber dem Werkzeug eine Drehbewegung ausführt. Bei dieser herkömmlichen Werkzeugschneiden-Verstelleinrichtung kommt ein Piezo-Translator zum Einsatz, der eine Kraft in Axialrichtung eines Werkzeugschafts erzeugt, die über einen zwischen dem Piezo-Translator und der Werkzeugschneide angeordneten Gelenkmechanismus in eine radial wirkende Kraft auf die Werkzeugschneide umgewandelt wird. Auf diese Weise wird eine Radialverstellung der Werkzeugschneide gegenüber einem Werkzeugschaft ermöglicht.

Zur Herstellung zylinderischer Innen- oder Außenkonturen ist es im Fall von Werkzeugen mit derartigen piezoelektrischen Einstellmechanismen jedoch erforderlich, daß das auf den Piezo-Kristall/Piezo-Translator wirkende elektrische Feld während des Betriebs des Werkzeugs konstant gehalten wird, um dadurch die einmal erzielte Einstellung der Werkzeugschneide während des Schneidvorgangs des Werkzeugs beizubehalten. Hierzu muß der Piezo-Kristall/Piezo-Translator während des Betriebs des Werkzeugs ständig mit einer elektrischen Spannung versorgt werden. Während die Spannungsversorgung bei stillstehenden Werkzeugen, wie z.B. einem Drehwerkzeug, relativ einfach, z.B. über eine Steckverbindung, zu bewerkstelligen ist, kann die Spannungsversorgung bei Werkzeugen, die für einen Rotationsbetrieb konzipiert sind, jedoch zu einem Problem bzw. aufgrund der Tatsache, daß hierzu eine kabellose Spannungseinspeisung erforderlich wäre, zu erhöhten Herstellungskosten führen.

Darüber hinaus besteht in dem Fall, in dem die Werkzeugenschneiden-Einstellung während des Betriebs des Werkzeugs durch eine ständige Spannungseinspeisung in den Piezo-Kristall/Piezo-Translator konstant gehalten werden soll, die Gefahr, daß sich das auf den Piezo-Kristall/Piezo-Translator wirkende elektrische Feld, das eigentlich konstant bleiben sollte, unter dem Einfluß äußerer magnetischer oder elektrischen Störfelder ungewollt ändert, was wiederum eine Änderung der Werkzeugschneideneinstellung zur Folge hätte. Diese Gefahr kann sich insbesondere im Fall von für einen Rotationsbetrieb konzipierten Werkzeugen, wie z.B. Bohrwerkzeugen, ergeben aufgrund der Tatsache, daß der Piezo-Kristall/Piezo-Translator und damit das auf den Piezo-Kristall/Piezo-Translator wirkende elektrische Feld ebenfalls in Rotation versetzt werden.

Die vorliegende Erfindung hat daher die Aufgabe, einen piezoelektrischen Einstellmechanismus für Werkzeugschneidelementen zu schaffen, der es erlaubt, eine bestimmte Einstellung der Werkzeugschneidelemente während des Betriebs des Werkzeugs ohne eine externe Spannungsversorgung und ohne großen technischen Aufwand zuverlässig einzuhalten.

Diese Aufgabe wird durch den piezoelektrischen Einstellmechanismus gemäß den Merkmalen des Patentanspruchs 1 gelöst. Der erfindungsgemäße piezoelektrische Einstellmechanismus zeichnet sich gegenüber herkömmlichen piezoelektrischen Einstellmechanismen durch einen Haltemechanismus aus, der es erlaubt, das (erste) piezoelektrische Verstellelement, z.B. ein als Rundstab ausgestalteter Piezo-Kristall, in einem bestimmten Deformationszustand mit mechanischen Mitteln zu stabilisieren. Durch diesen Haltemechanismus läßt sich verhindern, daß das piezoelektrische Verstellelement nach einer Unterbrechung der Spannungsversorgung zwischen einer äußeren Spannungsquelle und dem piezoelektrischen Verstellelement aus seinem durch die Spannungsversorgung erzielten bestimmten Deformationszustand wieder in seinen Ausgangszustand zurückkehrt. Da der durch die Spannungsversorgung erzielte, bestimmte Deformationszustand des piezoelektrischen Verstellelements aufgrund der Verbindung des piezoelektrischen Verstellelements und der Werkzeugschneide die Werkzeugschneideneinstellung bestimmt, läßt sich somit durch den Haltemechanismus eine bestimmte Werkzeugschneideneinstellung unabhängig von einer Spannungsversorgung und damit ungeachtet äußerer Störeinflüsse zuverlässig realisieren.

In einer bevorzugten Ausgestaltung umfaßt der Haltemechanismus eine das piezoelektrische Verstellelement im wesentlichen vollständig umgreifende Klemmeinrichtung, wie z.B. eine herkömmliche Klemmschelle, deren Klemmkraft so groß ist, daß das piezoelektrische Verstellelement in dem bestimmten Deformationszustand gehalten, d.h. stabilisiert und quasi "eingefroren" bleibt, sowie eine Entriegelungseinrichtung, z.B. ein (zweites) piezoelektrisches Verstellelement, um eine Entriegelung der Klemmeinrichtung und damit eine Beseitigung der durch die Klemmeinrichtung erzielten Klemmkraft auf das piezoelektrische Verstellelement zu ermöglichen. Bei dieser Ausgestaltung sind die die Verstellelemente vorteilhafterweise unabhängig voneinander elektrisch, d.h. mittels einer einheitlichen, nämlich elektrisch arbeitenden Steuer- oder Regeleinrichtung ansteuerbar. Dies ermöglicht eine besonders genaue Einstellung der Werkzeugschneidelemente.

Eine besonders einfache Ausgestaltung des erfindungsgemäßen Einstellmechanismus ergibt sich, wenn das Schneidelement mittels einer Halterung oder unmittelbar mit dem ersten Verstellelement fest verbunden ist. Bei Verwendung einer Halterung ergibt sich der besondere Vorteil, dass die Klemmeinrichtung das gesamte Volumen des piezoelektrischen Verstellelements (Piezo-Verstellaktor) erfassen kann.

Der erfindungsgemäßen Einstellmechanismus findet generell Anwendung für ein beliebiges Werkzeug zur materialabtragenden Bearbeitung, wie z.B. ein Dreh-, Bohr-, Fräs- oder Reibwerkzeug, das einen Werkzeugschaft und wenigstens ein an diesem einstellbar montiertes Schneidelement umfaßt.

Aufgrund eines Verstellbereichs von bis zu 100 µm bei einer Auflösung von kleiner als 0,1 µm und einer Belastbarkeit von mehr als 500 N wird der erfindunsgemäße Einstellmechanismus jedoch insbesondere an Feinbohrwerkzeugen oder Reibahlen eingesetzt, bei denen es im Hinblick auf die zu erzielende hohe Maß-, Form- und Lagegenauigkeit, Oberflächengüte und Oberflächenbeschaffenheit der zu bearbeitenden Bohrung auf eine äußerst präzise Einstellung des oder der Schneidelemente, z.B. PKDoder HM-Schneidplatten, ankommt.

Das erfindungsgemäße Feinbohrwerkzeug weist vorzugsweise zwei, in Ausnehmungen am Außenumfang des Werkzeugschafts diametral angeordnete Schneidelemente auf. Hierbei erweist es sich als besonders vorteilhaft, wenn das (erste) piezoelektrische Verstellelement in der Weise zwischen den beiden diametral angeordneten Schneidelemente plaziert ist, daß es unmittelbar mit beiden Schneidelementen in Verbindung gebracht werden kann. Unter der Voraussetzung, daß das piezoelektrische Verstellelement in Bezug auf die Drehachse des Feinbohrwerkzeugs in Radialrichtung lagezentriert angeordnet ist, was sich durch einfache konstruktive Maßnahmen am Werkzeugschaft und/oder am piezoelektrischen Verstellelement realisieren läßt, wird durch Anlegen einer elektrischen Spannung an das piezoelektrische Verstellelement und der daraus resultierenden elastischen Deformation des piezoelektrischen Verstellelements somit eine synchrone Einstellung beider Schneidelemente in Radialrichtung des Werkzeugschafts erreicht. Dabei läßt die gewünschte Einstellung der Schneidelemente beispielsweise mittels der vorstehend erwähnten Klemmschelle, die das (erste) piezoelektrische Verstellelement umgreift und in der Weise festklemmt, daß eine Rückbildung dessen elastischer Deformation nicht möglich ist, zuverlässig dauerhaft realisieren.

Soll mittels des Feinbohrwerkzeugs beispielsweise eine konische Bohrung erstellt werden, kann der erfindungsgemäße Einstellmechanismus ferner ein weiteres (drittes) piezoelektrisches Verstellelement umfassen, das in Bezug auf den Werkzeugschaft axial vom ersten piezoelektrischen Verstellelement beabstandet und unabhängig von diesem elektrisch ansteuerbar ist. Hierdurch läßt sich auf eine einfache Art und Weise eine Verjüngung der Schneidelemente erzielen.

Die Spannungsversorgung der piezoelektrischen Verstellelemente gestaltet sich als einfach, wenn am Werkzeugschaft ein gemeinsames Anschlußelement vorgesehen ist, das eine unabhängige elektrische Ansteuerung der Verstellelemente, d.h. eine unabhängige Einspeisung der Einstellspannung und der Entriegelungsspannung, ermöglicht. Um eine Unwucht während des Rotationsbetriebs des Feinbohrwerkzeugs zu vermeiden ist das gemeinsame Anschlußelement vorzugsweise rotationssymmetrisch ausgestaltet. Hierfür kann das gemeinsame Anschlußelement beispielsweise mehrere Schleifringe umfassen, die den jeweiligen Verstellelementen entsprechend zugeordnet sind, wobei einer der Schleifringe als gemeinsamer Masseanschluß fungieren kann. Durch diese Ausgestaltung wird selbst im Fall des für einen Rotationsbetrieb konzipierten Feinbohrwerkzeugs eine elektrische Ansteuerung der piezoelektrischen Verstellelemente und dadurch eine Einstellung der Schneidelemente während des Betriebs des Werkzeugs ermöglicht.

Eine besonders vorteilhafte Ausgestaltung der Spannungsversorgung ergibt sich dann, wenn entsprechend Anspruch 18 am Werkzeug ein Steckerteil vorgesehen wird, über das die Ansteuerung des zumindest einen piezoelektrischen Verstellelements und des Haltemechanismus erfolgt. Das Steckerteil kann an beliebiger Stelle des Werkzeugschafts vorgesehen sein, vorzugsweise ist es aber an einer Stelle ausgebildet, die im Einsatz des Werkzeugs vor Spänen, Kühl- oder Schmiermittel oder Temperatureinwirkung möglichst gut abgeschirmt ist.

Eine besonders vorteilhafte Lage des Steckerteils, wie sie im Anspruch 19 beschrieben ist, ergibst sich beispielsweise dann, wenn das Werkzeug mit einem sogenannten Hohlschaftkegel ausgestattet ist, der über eine sogenannte HSK-Kupplung an ein Werkzeugträgerteil wie z.B. einen Werkzeugsystemmodul oder eine Spindel anschließbar ist. Derartige HSK-Kupplungen werden in der Ausgestaltung als Schnittstelle oder Trennstelle immer häufiger eingesetzt, wenn es darum geht, Werkzeuge mit besonders hoher Steifigkeit modular zusammenzustellen bzw. an eine Maschinenspindel zu koppeln. Beispiele für derartige HSK_Spannsysteme sind in den Druckschriften DE 38 07 140 C2 oder DE 42 20 873 A1, auf deren Inhalt hier ausdrücklich Bezug genommen wird offenbart.

Die bei derartigen Kupplungen vorgesehene verhältnismäßig großflächige Radialstirnflächenpaarung, über die sich die zu kuppelnden Teile aneinander abstützen wird mit der Weiterbildung des Anspruchs 19 in vorteilhafter Weise genutzt, das Steckerteil vor äußeren Einflüssen optimal abzuschirmen. Das Steckerteil kann im Betrieb des Werkzeugs entweder deaktiviert sein, wobei in diesem Fall über die Radialringflächenpaarung lediglich eine allseitige Abdichtung des Steckerteils erfolgt, oder aber ständig über ein Steckerteil-Gegenstück im Werkzeugträgerteil an entsprechende Steuerleitungen im Werkzeugträgerteil, wie z.B. in einer Spindel angeschlossen sein, wobei in diesem Fall das rotationssymmetrische Anschlusselement zur Übertragung der elektrischen Steuersignale während des Werkzeugbetriebs im Werkzeugträgerteil integriert ist.

Unter Bezugnahme auf die beigefügten Zeichnungen erfolgt nun die Beschreibung des erfindungsgemäßen Einstellmechanismus an einem bevorzugten Anwendungsbeispiel. In den Zeichnungen zeigt:
Fig. 1 einen Vertikalschnitt in Längsrichtung durch ein Feinbohrwerkzeug mit einem erfindungsgemäßen piezoelektrischen Einstellmechanismus;
Fig. 2 einen Horizontalschnitt in Längsrichtung durch das in Fig. 1 gezeigte Feinbohrwerkzeug; und
Fig. 3 eine schematische Schnittansicht einer weiteren Ausführungsform des Werkzeugs mit einer modifizierten Art der elektrischen Ansteuerung des piezoelektrischen Einstellmechanismus.

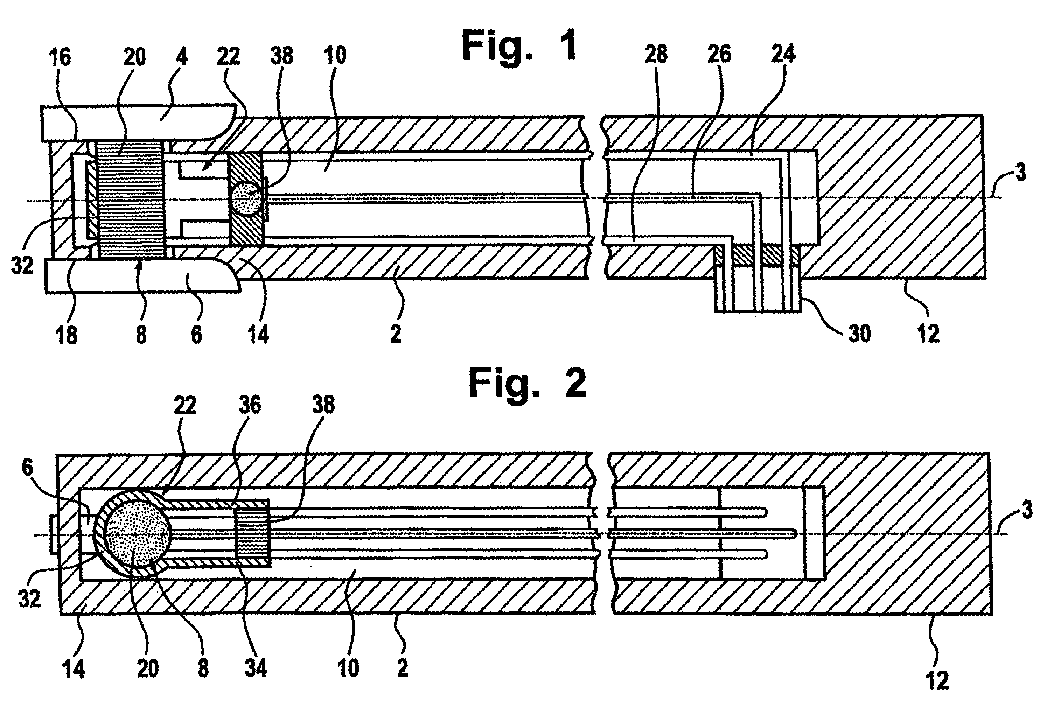

Das in Fig. 1 nur schmeatisch dargestellte Feinbohrwerkzeug umfaßt als seine wesentlichen Bestandteile einen Werkzeugschaft 2, zwei Schneidelemente 4, 6 sowie einen erfindungsgemäßen piezoelektrischen Einstellmechanismus 8 zur Einstellung der Schneidelemente 4, 6 relativ zum Werkzeugschaft 2.

Der Werkzeugschaft 2 kann in beliebiger Art und Weise an eine nicht dargestellte Werkzeugmaschinenspindel angeschlossen oder Bestandteil eines ebenfalls nicht dargestellten, modular aufgebauten Werkzeugsystems sein. Wie es aus Fig. 1 und Fig. 2 ersichtlich ist, ist im Werkzeugschaft 2 ein sich in Richtung der Längs- bzw. Drehachse 3 des Werkzeugschafts 2 erstreckender Hohlraum 10 ausgebildet, in dem der erfindungsgemäße piezoelektrische Einstellmechanismus 8 aufgenommen ist. Des weiteren sind am Außenumfang 12 im Kopfabschnitt 14 des Werkzeugschafts 2 in Bezug auf die Längs- bzw. Drehachse 3 diametral angeordnete Ausnehmungen 16, 18 vorgesehen, in denen jeweils eines der beiden Schneidelemente 4, 6, z.B. PKD- oder HM-Schneidplatten, radial einstellbar und vorzugsweise geführt aufgenommen sind.

Der piezoelektrische Einstellmechanismus 8 umfaßt im wesentlichen ein mit den beiden Schneidelementen 4, 6 in Verbindung stehendes erstes piezoelektrisches Verstellelement 20, einen Haltemechanismus 22, elektrische Leitungen 24, 26, 28 und ein gemeinsames Anschlußelement 30.

Die Schneidelemente 4, 6 sind in herkömmlicher Art und Weise, z.B. mittels einer (nicht dargestellten) Halterung oder unmittelbar, am ersten piezoelektrischen Verstellelement 20 befestigt. Das erste piezoelektrische Verstellelement 20, z.B. ein Piezokristall herkömmlicher Art, ist in diesem Anwendungsbeispiel als ein länglicher Rundstabkörper ausgestaltet, der in Bezug auf die Längs- bzw. Drehachse 3 des Werkzeugschafts 2 senkrecht in der Weise angeordnet ist, daß er die beiden Schneidelemente 4, 6 diametral verbindet. Obwohl es aus Fig. 1 und Fig. 2 nicht ersichtlich ist, ist das erste piezoelektrische Verstellelement 20 in Bezug auf die Längs- bzw. Drehachse 3 des Werkzeugschafts 2 in Radialrichtung lagezentriert angeordnet. Dies kann durch einfache konstruktive Maßnahmen am Werkzeugschaft 2 und/oder am piezoelektrischen Verstellelement 20 realisiert werden.

Der Haltemechanismus 22 umfaßt eine das erste piezoelektrische Verstellelement 20 mechanisch umgreifende Klemmschelle 32 mit zwei gegenüberliegenden, im Klemmzustand der Klemmschelle 32 beabstandet angeordneten, freistehenden Endabschnitten 34, 36 sowie ein zwischen den beiden Endabschnitten 34, 36 der Klemmschelle 32 angeordnetes zweites piezoelektrisches Verstellelement 38, z.B. einen ebenfalls als Rundstabkörper ausgestalteten Piezokristall, der wie es aus Fig. 1 und Fig. 2 ersichtlich ist, in Bezug auf die Längs- bzw. Drehachse 3 des Werkzeugschafts 2 gegenüber dem ersten piezoelektrischen Verstellelement 20 um 90° verdreht orientiert ist. Die Klemmschelle 32 ist im Hinblick auf die erforderliche Klemmkraft, die durch Eigenspannungen im Material der Klemmschelle 32 zu erzeugen ist, so konzipiert, daß sie das erste piezoelektrische Verstellelement 20 nach einer einmal durchgeführten Einstellung, die nachstehend erläutert wird, und während des anschließenden Zerspanungsbetriebs in der Weise geklemmt hält, daß das erste piezoelektrische Verstellelement 20 nach Unterbrechung seiner Spannungsversorgung, d.h. nach Wegfall des auf den piezoelektrischen Kristall einwirkenden elektrischen Feldes, nicht wieder seinen anfänglichen Ruhedeformationszustand einnehmen kann. Die Klemmschelle 32 läßt sich durch Anlegen einer elektrischen Spannung an das zwischen den beiden Endabschnitten 34, 36 der Klemmschelle 32 angeordnete zweite piezoelektrische Verstellelement 38 durch dessen elastische Deformation unter der Wirkung des durch die Spannung geschaffenen elektrischen Feldes öffnen. Hierfür ist natürlich erforderlich, daß das zweite piezoelektrische Verstellelement 38 bei Anlegen einer elektrischen Spannung eine Kraft erzeugt, die größer ist als die durch Eigenspannungen der Klemmschelle 32 bewirkte und auf das erste piezoelektrische Verstellelement 20 aufgebrachte Klemmkraft der Klemmschelle 32. Im entriegelten bzw. geöffneten Zustand der Klemmschelle 32 wird durch Anlegen einer elektrischen Spannung an das erste piezoelektrische Verstellelement 20 eine Kraft erzeugt, die in Radialrichtung des Werkzeugschafts 2 synchron auf die Schneidelemente 4, 6 wirkt und damit eine Abstandsänderung der beiden Schneidelemnte 4, 6 in Radialrichtung verursacht. Auf diese Weise läßt sich die gewünschte Einstellung der Schneidelemente 4, 6 in Radialrichtung des Werkzeugschafts 2 realisieren.

Die Klemmschelle 32 ist darüber hinaus, wie es insbesondere aus Fig. 1 ersichtlich ist, im wesentlichen so auf das erste piezoelektrische Verstellelement 20 abgestimmt, daß es das erste piezoelektrische Verstellelement 20 möglichst über die ganze Länge umgreift, um eine Rückbildung der durch die elektrische Ansteuerung bewirkten elastischen Deformation auf möglichst geringe Längenabschnitte zu beschränken.

Sowohl das erste als auch das zweite piezoelekrische Verstellelement zeichnen sich durch einen Verstellbereich von bis zu 100 µm bei einer Auflösung (kleinste einstellbare Verstellung) von weniger als 0,1 µm und eine Belastbarkeit von mehr als 500 N aus.

Die Spannungsversorgung der beiden piezoelektrischen Verstellelemente 20, 38 erfolgt unabhängig voneinander über die im Hohlraum 10 angeordneten elektrischen Leitungen 24, 26, 28 sowie das gemeinsame Anschlußelement 30, das an eine (nicht dargestellte) externe Spannungsquelle anschließbar ist. Die elektrischen Leitungen 24, 26, 28 sind natürlich so angeordnet bzw. ausgestaltet, daß sich durch deren Anordnung im Rotationsbetrieb des Feinbohrwerkzeugs keine Unwuchten ergeben. Dasselbe gilt auch für das gemeinsame Anschlußelement 30, das, obwohl es in Fig. 1 aus Gründen einer einfacheren Darstellungsweise als ein herkömmlicher Anschlußstecker dargestellt ist, vorzugsweise rotationssymmetrisch ausgestaltet ist Hierzu kann das gemeinsame Anschlußelement 30 den jeweiligen piezoelektrischen Verstellementen 4, 6 zugeordnete Schleifringe umfassen, die in Ringausnehmungen am Außenumfang des Werkzeugschafts 2 eingelassen oder als Ringkörper am Außenumfang des Werkzeugschafts 2 angeordnet und in geeigneter Weise an die elektrischen Leitungen 24, 26, 28 angeschlossen sind. Über das gemeinsame Anschlußelement 30 erfolgt somit ein unabhängige Einspeisung der für eine Einstellung der Schneidelemente 4, 6 und der für die Entriegelung der Klemmschelle 32 erforderlichen elektrischen Spannungen.

Der Haltemechanismus 22 des erfindungsgemäßen Einstellmechanismus gewährleistet eine gleichbleibende Einstellung der Schneidelemente 4, 6 unabhängig davon, ob das erste piezoelektrische Verstellelement 4 mit einer Spannung versorgt wird oder nicht. In dem in Fig. 1 und Fig. 2 gezeigten Anwendungsbeispiel des erfindungsgemäßen Einstellmechanismus ist es daher nicht erforderlich, die Spannungsversorgung zwischen dem ersten piezoelektrischen Verstellelement 2 und der externen Spannungsquelle nach einer einmal durchgeführten Einstellung der Schneidelemente 4, 6 aufrechtzuerhalten, um eine bestimmte Einstellung der Schneidelemente 4, 6 beizubehalten. Durch die Ausgestaltung des gemeinsamen Anschlußelements 30 als eine Anordnung von Schleiringen wäre es generell jedoch möglich, auch während des Rotationsbetriebs des Feinbohrwerkzeugs die die piezoelektrischen Verstellelemente 4, 6 mit Spannungen zu versorgen, um beispielsweise eine nachträgliche Korrektur der Einstellung der Schneidelemente 4, 6 vornehmen oder aber durch eine Spannungseinspeisung mit einer auf die Drehzahl des Feinbohrwerkzeugs abgestimmten Spannungsfrequenz unrunde Bohrungen herstellen zu können.

Im folgenden wird nun das Funktionsprinzip des erfindungsgemäßen Einstellmechanismus erläutert. Das Feinbohrwerkzeug wird zunächst in einem nicht dargestellten speziellen Voreinstellgerät auf den geforderten Bohrungsdurchmesser eingestellt. Im Anschluß daran werden die piezoelektrischen Verstellelemente 20, 38 über das gemeinsame Anschlußetement 30 und die elektrischen Leitungen 24, 26, 28 elektrisch angesteuert. Hierbei wird zunächst das zweite piezoelektrische Verstellelement 38 elektrisch angesteuert, um durch die dadurch verursachte elastische Deformation des zweiten piezoelektrischen Verstellelements 38 die Klemmschelle 32 zu entriegeln bzw. zu öffnen und dadurch eine elastische Deformation des ersten piezoelektrischen Verstellelements 4 zum Zwecke der Einstellung der Schneidelemente 4, 6 zu ermöglichen. Hierbei wird das erste piezoelektrische Verstellelement 4 durch eine stufenlose oder in sehr feinen Stufen einstellbare Steuerspannung derart angesteuert, daß die Schneidelemente 4, 6 entsprechend dem gewünschten Bohrungsdurchmesser des Feinbohrwerkzeugs auf das bestimmte radiale Maß eingestellt werden.

Nach Erreichen der gewünschten radialen Einstellung der Schneidelemente 4, 6 wird die an das erste piezoelektrische Verstellelement 20 angelegte Einstellspannung zunächst aufrechterhalten, während die an das zweite piezoelektrische Verstellelement 38 angelegte Entriegelungsspannung abgeschaltet wird, wodurch die Klemmschelle 32 bedingt durch die während der elektrischen Ansteuerung des zweiten piezoelektrischen verstellelements so in der klemmschelle 32 erzeugten Eigenspannungen das erste piezoelektrische Verstellelement 20 derart klemmt, daß die elastische Deformation des ersten piezoelektrischen Verstellelements 20, die durch die an das erste piezoelektrische Verstellelement 20 angelegte Einstellspannung verursacht wird, beibehalten wird. Nach dem Abschalten der Einstellspannung vom ersten piezoelektrischen Verstellelement 20 ändert sich somit der zum Zeitpunkt der Klemmung der Klemmschelle 32 vorliegende Deformationszustand des von der Klemmschelle 32 erfaßten Längenabschnitts des ersten piezoelektrischen Verstellelements 20 nicht mehr, wodurch sich auch die dadurch bewirkte Einstellung der Schneidelemente 4, 6 nicht mehr ändert. Das Feinbohrwerkzeug ist somit einsatzbereit. Wie es vorstehend bereits erwähnt wrude, wäre eine elektrische Ansteuerung der piezoelektrischen Verstellelemente auch während der Zerspanung denkbar, aber für den normalen Betrieb des Feinbohrwerkzeugs gemäß dem beschriebenen Anwendungsbeispiel nicht erforderlich.

In einer vorteilhaften Abwandlung des vorstehend beschriebenen erfindunsgemäßen Einstellmechanismus kann der Einstellmechanismus aus zwei oder mehreren, in Richtung der Längs- oder Drehachse des Werkzeugschafts 2 beabstandet angeordneten piezoelektrischen Verstellelementen bestehen, wodurch eine Verjüngung der Schneidelemente 4, 6 und damit ein konisches Bohrloch realisierbar wäre.

Selbstverständlich sind Abwandlungen des gezeigten Systems möglich, ohne den Grundgedanken der Erfindung zu verlassen. So können sich z.B. abweichend von der Ausführungsform nach den Figuren 1 und 2 die beiden Schneidelemente 4, 6 über Distanzstücke am nach wie vor diametral ausgerichteten piezoelektrischen Verstellelement 8 abstützen, so dass die Klemmschelle 32 die gesamte Mantelfläche des piezoelektrischen Verstellelements und zwar unter Einbeziehung des gesamten Verformungsspektrums erfassen kann. Somit lässt sich das gesamte Volumen des piezoelektrischen Verstellelements 20 in dem vorbestimmten Verformungszustand stabilisieren.

Anstatt des einstückigen piezoelektrischen Verstellelements 20 der Figuren 1 und 2, kann auch ein mehrteiliges, vorzugsweise zweiteiliges Element Anwendung finden, wobei diese Piezo-Verstellelemente vorzugsweise von einer gemeinsamen Form-Stabilisierungseinrichtung, beispielsweise in Form einer Schelle 32 umgeben sind. Die Piezo-Verstellelemente können sich dann mit ihrem radial inneren Ende an einem im Werkzeugkopf ausgebildeten Widerlager abstützen, das dann die Funktion der Radiallage-Stabilisierung für die Piezo-Verstellelemente übernimmt.

Die Kontakte des Anschlusselements 30 können auch im Werkzeugschaft versenkt aufgenommen sein, so dass das Werkzeug nach erfogter Einstellung in einem herkömmlichen Spannschaft aufgenommen werden kann.

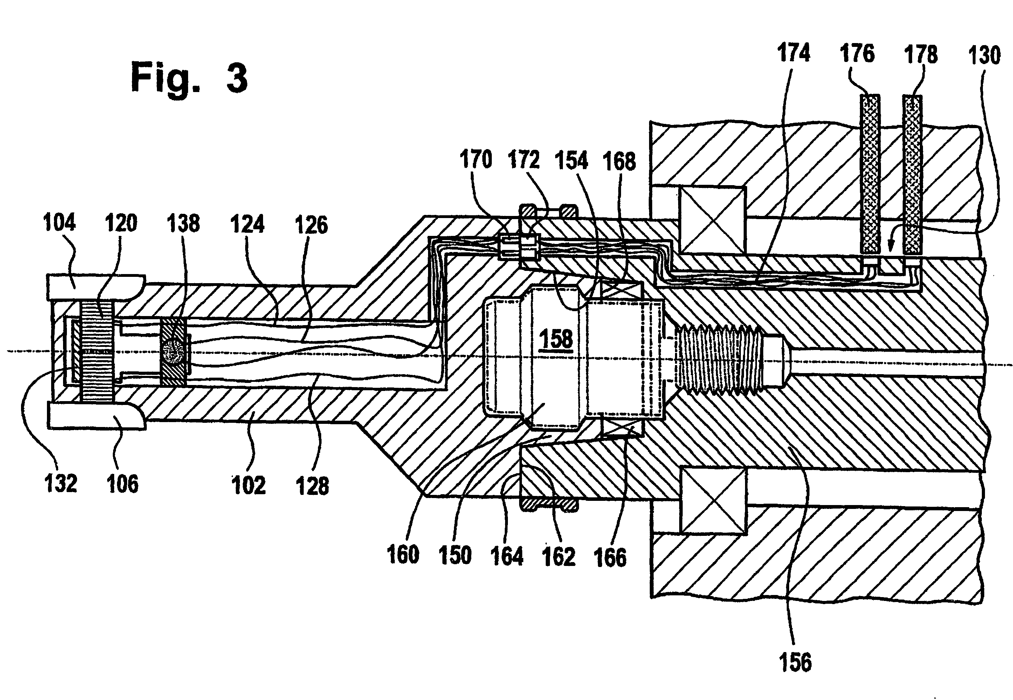

In Figur 3 ist eine Variante eines erfindungsgemäßen Werkzeugs dargestellt, bei dem einerseits die Form des Werkzeugschafts und andererseits die Spannungsversorgung der piezoelektrischen Verstellelemente modifiziert sind. Der Schneiden-Einstellmechanismus ist unverändert, so dass auf diesen nicht näher eingegangen werden muss. Diejenigen Komponenten des Werkzeugs, die den Bauteilen der Ausführungsform der Ausführungsform gemäß Figur 1 und 2 entsprechen, sind mit Bezugszeichen versehen, die um 100 erhöht sind.

Der Werkzeugschaft 102 hat in diesem Fall einen Hohlschaftkegel 150, der mit einer entsprechenden Aufnahme 154 in einer Maschinenspindel 156 aufgenommen ist. Mit 158 in eine HSK-Spannpatrone bezeichnet, die mit strichpunktierten Linien angedeutet ist und in der Spindel 156 fest verankert ist. Diese Spannpatrone kann beispielsweise so ausgestaltet sein, wie es in der eigenen Patentveröffentlichung DE 197 53 663 A1 beschrieben ist.

Bei deratigen HSK-Spannsystemen erfolgt das Zusammenspannen zwischen Werkzeugschaft 102 und Spindel 156 dadurch, dass mittets mehrerer Spannelemente 160 der Spannpatrone 158 der Hohlschaftkegel 150 so weit in die Aufnahme 154 eingezogen wird, bis eine Radialringfläche 162 des Werkzeugschafts 102 in flächige Anlage mit einer Gegen-Stützfläche 164 auf seiten der Spindel 156 gelangt. Gleichzeitig erfogt beim Einzeiehen des Werkzeugs in die Aufnahme ein formschlüssiger Eingriff zumindest eines Mitnehmersteins 166 in eine strinseitige Aushehmung 168 im Hohlschaftkegel 150.

Diese Drehlagefixierung wird bei der Ausführungsform nach Figur 3 dazu genutzt, die Versorgung der Verstellelemente 120, 138 besonders störungsfrei, d.h. vor äußeren Einflüssen geschützt auszugestalten. Die Stromversorgungsleitungen 124, 126 und 128 sind dabei zu einem Steckerteil 170 geführt, das in der drehlagefixierten Stellung des Werkzeugschafts 102 bezüglich der Spindel 156 fluchtend einem Stecker-Gegenstück 172 gegenüberliegt. Von diesem Stecker-Gegenstück 172 verlaufen die Steuerleitungen 174 zu einem Anschlussbereich 130, an dem die Steuersignale über Kontakte 176, 178 von einer nicht gezeigten Steuereinheit einspeisbar sind. Dies kann unter Zwischenschaltung von Schlaifringen und/oder Bürsten während der Rotation des Werkzeugs erfolgen, oder aber bei Spindelstillstand, indem die Kontakte 176, 178 für den Einstellvorgang in Kontakt mit dem Anschlussbereich gebracht werden. Da die Radialringflächen 160, 162 im angekuppelten Zustand des Werkzeugs flächig gegeneinander gepresst sind, sind die Steckerteile 170, 172 und damit die Versorgungsleitungen 124, 126, 128 von der Umgebung gut abgeschirmt.

Selbstverständlich sind auch bezüglich dieser Ausführungsform Abweichungen möglich, ohne den Erfindungsgedanken zu verlassen. So können die Steckerteile 170, 172 und/oder die Anschlüsse im Bereich 130 beispielsweise äquidistant über den Umfang verteilt sein, damit Unwuchten weitgehend vermieden werden.

Auch kann der Kanal für die Steuerleitungen 174 in der Spindel 156 gänzlich entfallen. Die Einstellung der Werkzeugschneiden erfolgt dann derart, dass das Werkzeug in eine gesonderte Einstellvorrichtung eingesetzt wird, in der das Gegenstück 172 des Steckers und der Anschluss zur elektrischen Steuereinheit vorgesehen ist.

Auch kann anstelle der Maschinenspindel 165 auch ein anderer Werksystemmodul, beispielsweise eine Schaftverlängerung vorgesehen sein.

Die vorliegende Erfindung bezieht sich somit im allgemeinen auf einen piezoelektrischen Einstellmechanismus zum Einstellen eines an einem Werkzeugschaft eines Werkzeugs einstellbar montierten Schneidelements, der ein mit dem Schneidelement in Verbindung stehendes erstes piezoelektrisches Verstellelement zum Verstellen des Schneidelements relativ zum Werkzeugschaft sowie einen Haltemechanismus zum Halten des ersten Verstellelements in einem bestimmten Deformationszustand umfaßt. Der erfindungemäße piezoelektrische Einstellmechanismus findet im besonderen Anwendung für ein Feinbohrwerkzeug zur Einstellung von am Außenumfang des Feinbohrwerkzeugs angeordneten Schneidelementen in Radialrichtung des Feinbohrwerkzeugs.

## Patentansprüche

1. Einstellmechanismus (8) zum Einstellen eines an einem Werkzeugschaft (2; 102) eines Werkzeugs einstellbar montierten Schneidelements (4, 6; 104, 106), umfassend ein mit dem Schneidelement (4, 6) in Verbindung stehendes erstes piezoelektrisches Verstellelement (20; 120; 120; 120) zum Verstellen des Schneidelements (4, 6; 104, 106) relativ zum Werkzeugschaft, **gekennzeichnet durch** einen Haltemechanismus (32; 132; 132; 132) zum Halten des ersten Verstellelements (20; 120; 120; 120) in einem bestimmten Deformationszustand.

2. Einstellmechanismus nach Anspruch 1, **dadurch gekennzeichnet, daß** der Haltemechanismus (32; 132) eine das erste Verstellelement (20; 120) umgreifende Klemmeinrichtung (32; 132) zum Klemmen des ersten piezoelektrischen Verstellelements (20; 120) sowie eine Entriegelungseinrichtung (38; 138) zum Entriegeln der Klemmeinrichtung (32; 132) umfaßt.

3. Einstellmechanismus nach Anspruch 2, **dadurch gekennzeichnet, daß** die Entriegelungseinrichtung (38; 138) ein zweites piezoelektrisches Verstellelement (38; 138) umfaßt.

4. Einstellmechanismus nach Anspruch 3, **dadurch gekennzeichnet, daß** die Verstellelemente (20; 120, 38; 138) unabhängig voneinander elektrisch ansteuerbar sind.

5. Einstellmechanismus nach Anspruch 4, **gekennzeichnet durch** ein gemeinsames Anschlußelement (30) am Werkzeugschaft (2) zur elektrischen Spannungsversorgung der Verstellelemente (20; 120, 38; 138).

6. Einstellmechanismus nach einem der Ansprüche 1 bis 5, **dadurch gekennzeichnet, daß** das Schneidelement (4, 6; 104, 106) unmittelbar mit dem ersten Verstellelement (20; 120) in Verbindung steht.

7. Werkzeug zur materialabtragenden Bearbeitung, umfassend einen Werkzeugschaft (2; 102) und ein am Werkzeugschaft (2) einstellbar montiertes Schneidelement (4, 6; 104, 106), **gekennzeichnet durch** einen Einstellmechanismus (8) nach einem der Ansprüche 1 bis 6.

8. Werkzeug nach Anspruch 7, **gekennzeichnet durch** mehrere mit dem ersten Verstellelement (20; 120) in Verbindung stehende Schneidelemente (4, 6).

9. Werkzeug nach Anspruch 7 oder 8, **dadurch gekennzeichnet, daß** das Werkzeug für einen Rotationsbetrieb konzipiert ist.

10. Feinbohrwerkzeug umfassend einen Werkzeugschaft (2), ein am Werkzeugschaft (2; 102) einstellbar montiertes Schneidelement (4, 6) und einen im Werkzeugschaft (2; 102) aufgenommenen, mit dem Schneidelement (4, 6) in Verbindung stehenden Einstellmechanismus (8) mit einem ersten piezoelektrischen Verstellelement (20; 120) zum Verstellen des Schneidelements (4, 6) in Radialrichtung des Werkzeugschafts (2; 102), **gekennzeichnet durch** einen Haltemechanismus (32; 132) zum Halten des ersten Verstellelements (20; 120) in einem bestimmten Deformationszustand.

11. Feinbohrwerkzeug nach Anspruch 10, **gekennzeichnet durch** zwei in entsprechenden Ausnehmungen (16, 18) am Außenumfang (12) des Werkzzeugschafts (2; 102) diametral angeordnete Schneidelemente (4, 6; 104, 106), wobei das erste Verstellelement (20; 120) zwischen den beiden Schneidelementen (4, 6) angeordnet ist.

12. Feinbohrwerkzeug nach Anspruch 10 oder 11, **dadurch gekennzeichnet, daß** das erste Verstellelement (20; 120) unmittelbar mit den beiden Schneidelementen (4, 6; 104, 106) in Verbindung steht.

13. Feinbohrwerkzeug nach einem der Ansprüche 10 bis 12, **dadurch gekennzeichnet, daß** der Haltemechanismus (32; 132) eine das erste Verstellelement (20; 120) im wesentlichen vollständig umgreifende Klemmschelle (32; 132) umfaßt.

14. Feinbohrwerkzeug nach Anspruch 13, **dadurch gekennzeichnet, daß** der Haltemechanismus (32; 132) ein zwischen zwei gegenüberliegenden freistehenden Endabschnitten (34, 36) der Klemmschelle (32; 132) angeordnetes zweites piezoelektrisches Verstellelement (38; 138; 138; 138) zum Entriegeln der Klemmschelle (32; 132) umfaßt.

15. Feinbohrwerkzeug nach Anspruch 14, **dadurch gekennzeichnet, daß** das erste und das zweite Verstellelement (20; 120, 38; 138) unabhängig voneinander elektrisch ansteuerbar sind.

16. Feinbohrwerkzeug nach einem der Ansprüche 10 bis 15, **dadurch gekennzeichnet, daß** der Einstellmechanismus (8) ein in Bezug auf den Werkzeugschaft (2) axial vom ersten Verstellelement (20; 120) beabstandetes und unabhängig von diesem elektrisch ansteuerbares drittes piezoelektrisches Verstellelement umfaßt.

17. Feinbohrwerkzeug nach einem der Ansprüche 10 bis 16, **gekennzeichnet durch** ein beispielsweise am Werkzeugschaft (2; 102) vorgesehenes gemeinsames, vorzugsweise rotationssymmetrisches Anschlußelement (30; 130) zum unabhängigen elektrischen Ansteuern des zumindest einen Verstellelements (20; 120, 38; 138) und des Haltemechanismus (32; 132).

18. Feinbohrwerkzeug nach einem der Ansprüche 10 bis 17, **gekennzeichnet durch** ein Steckerteil (30; 170) zum Anschluss von elektrischen Steuerleitungen (174) für das zumindest eine Verstellelement (20; 120, 38; 138) bzw. für den Haltemechanismus (32; 132).

19. Feinbohrwerkzeug nach Anspruch 18 , bei dem der Werkzeugschaft (102) einen Hohtschaftkegel (150) trägt, der in eine Radialringfläche (162) übergeht, mit der das Werkzeug über eine HSK-Kupplung gegen eine Spannfläche (164) des Werkzeugträgerteils (Spindel 156) spannbar ist, **dadurch gekennzeichnet, dass** das Steckerteil (170) in der Radialringfläche (162) liegt.

20. Feinbohrwerkzeug nach einem der Ansprüche 17 bis 19, **dadurch gekennzeichnet, daß** das gemeinsame Anschlußelement (30; 130) dem zumindest einen Verstellelemente (20; 120, 38; 138) und dem Haltemechanismus (32; 132) zugeordnete Schleifringe umfaßt.

21. Feinbohrwerkzeug nach einem der Ansprüche 10 bis 20, **dadurch gekennzeichnet, daß** die piezoelektrischen Verstellelemente (20; 120) einen Verstellbereich bis 100 µm bei einer Auflösung von kleiner als 0,1 µm und eine Belastbarkeit von mehr als 500 N aufweisen.

## Claims

1. An adjusting mechanism (8) for adjusting a cutting element (4, 6; 104, 106) mounted adjustably on a tool shank (2; 102) of a tool, comprising a first piezoelectric positioning element (20; 120; 120; 120), in connection with the cutting element (4, 6), for positioning the cutting element (4, 6; 104, 106) relative to the tool shank, **characterized by** a retaining mechanism (32; 132; 132; 132) for retaining the first positioning element (20; 120; 120; 120) in a specified deformation condition.

2. An adjusting mechanism according to claim 1, **characterized in that** the retaining mechanism (32; 132) comprises a clamping device (32; 132) that encloses the first piezoelectric positioning element (20; 120), for clamping the first piezoelectric positioning element (20; 120), as well as a release device (38; 138) for release of the clamping device (32; 132).

3. An adjusting mechanism according to claim 2, **characterized in that** the release device (38; 138) comprises a second piezoelectric adjusting element (38; 138).

4. An adjusting mechanism according to claim 3, **characterized in that** the positioning elements (20; 120, 38; 138) can be electrically energized independently of one another.

5. An adjusting mechanism according to claim 4, **characterized by** a common terminal element (30) on the tool shank (2) for supplying electrical voltage to positioning elements (20; 120, 38; 138).

6. An adjusting mechanism according to one of claims 1 to 5, **characterized in that** the cutting element (4, 6; 104, 106) is connected directly to the first positioning element (20; 120).

7. A tool for machining by material removal, comprising a tool shank (2; 102) and a cutting element (4, 6; 104, 106) mounted adjustably on the tool shank (2), **characterized by** an adjusting mechanism (8) according to one of claims 1 to 6.

8. A tool according to claim 7, **characterized by** a plurality of cutting elements (4, 6) connected to the first positioning element (20; 120).

9. A tool according to claim 7 or 8, **characterized in that** the tool is designed for rotary operation.

10. A precision boring tool comprising a tool shank (2), a cutting element (4, 6) mounted adjustably on the tool shank (2; 102) and an adjusting mechanism (8), which is received in the tool shank (2; 102), is connected to the cutting element (4, 6) and is provided with a first piezoelectric positioning element (20; 120) for positioning the cutting element (4, 6) in the radial direction of the tool shank (2; 102), **characterized by** a retaining mechanism (32; 132) for retaining the first positioning element (20; 120) in a specified deformation condition.

11. A precision boring tool according to claim 10, **characterized by** two cutting elements (4, 6; 104, 106) disposed diametrally in corresponding recesses (16, 18) on the outside circumference (12) of the tool shank (2; 102), the first positioning element (20; 120) being disposed between the two cutting elements (4, 6).

12. A precision boring tool according to claim 10 or 11, **characterized in that** the first positioning element (20; 120) is connected directly to both cutting elements (4, 6; 104, 106).

13. A precision boring tool according to one of claims 10 to 12, **characterized in that** the retaining mechanism (32; 132) comprises a collar band (32; 132) that substantially completely encloses the first positioning element (20; 120).

14. A precision boring tool according to claim 13, **characterized in that** the retaining mechanism (32; 132) comprises a second piezoelectric positioning element (38; 138; 138; 138) disposed between two opposite free-standing end portions (34, 36) of the collar band (32; 132) for release of the collar band (32; 132).

15. A precision boring tool according to claim 14, **characterized in that** the first and second positioning elements (20; 120, 38; 138) can be electrically energized independently of one another.

16. A precision boring tool according to one of claims 10 to 15, **characterized in that** the adjusting mechanism (8) comprises a third piezoelectric positioning element, which is spaced axially apart from the first positioning element (20; 120) relative to the tool shank (2) and which can be electrically energized independently of the said first element.

17. A precision boring tool according to one of claims 10 to 16, **characterized by** a common terminal element (30; 130), which is provided, for example, on the tool shank (2; 102) and which is preferably rotationally symmetric, for independent electrical energization of the at least one positioning element (20; 120, 38; 138) and of the retaining mechanism (32; 132).

18. A precision boring tool according to one of claims 10 to 17, **characterized by** a connector part (30; 170) for connection of electric control leads (174) for the at least one positioning element (20; 120, 38; 138) or for the retaining mechanism (32; 132).

19. A precision boring tool according to claim 18, in which the tool shank (102) carries a hollow taper shank (150), which merges into a radial annular face (162), with which the tool can be chucked via an HSK coupling against a chucking face (164) of the tool-carrier part (spindle 156), **characterized in that** the connector part (170) is disposed in the radial annular face (162).

20. A precision boring tool according to one of claims 17 to 19, **characterized in that** the common terminal element (30; 130) comprises slip rings associated with the at least one positioning element (20; 120; 38; 138) and with the retaining mechanism (32; 132).

21. A precision boring tool according to one of claims 10 to 20, **characterized in that** the piezoelectric positioning elements (20; 120) have a positioning range of up to 100 µm at a resolution of better than 0.1 µm and a loadability of more than 500 N.

## Revendications

1. Mécanisme de réglage (8) pour régler un élément coupant (4, 6 ; 104, 106) monté et réglable sur un manche d'outil (2 ; 102) d'un outil, comprenant un premier élément d'ajustement (20 ; 120 ; 120 ; 120) piézoélectrique en liaison avec l'élément coupant (4, 6) pour ajuster l'élément coupant (4, 6 ; 104, 106) par rapport au manche d'outil, **caractérisé par** un mécanisme de retenue (32 ; 132 ; 132 ; 132) pour maintenir le premier élément d'ajustement (20 ; 120 ; 120 ; 120) dans un état de déformation déterminé.

2. Mécanisme de réglage selon la revendication 1, dans lequel le mécanisme de retenue (32 ; 132) comprend un dispositif de serrage (32 ; 132) entourant le premier élément d'ajustement (20 ; 120) pour enserrer le premier élément d'ajustement (20 ; 120) piézoélectrique, ainsi qu'un dispositif de déverrouillage (38 ; 138) pour déverrouiller le dispositif de serrage (32 ; 132).

3. Mécanisme de réglage selon la revendication 2, dans lequel le dispositif de déverrouillage (38, 138) comprend un deuxième élément d'ajustement (38 ; 138) piézoélectrique.

4. Mécanisme de réglage selon la revendication 3, dans lequel les éléments d'ajustement (20 ; 120, 38 ; 138) peuvent être asservis électriquement indépendamment l'un de l'autre.

5. Mécanisme de réglage selon la revendication 4, **caractérisé par** un élément de raccordement (30) commun sur le manche d'outil (2) pour l'alimentation en tension électrique des éléments d'ajustement (20 ; 120, 38 ; 138).

6. Mécanisme de réglage selon l'une des revendications 1 à 5, dans lequel l'élément coupant (4, 6 ; 104, 106) est en liaison directe avec le premier élément d'ajustement (20 ; 120).

7. Outil pour le traitement par enlèvement de matériau, comprenant un manche d'outil (2 ; 102) et un élément coupant (4, 6 ; 104, 106) monté et réglable sur le manche d'outil (2), **caractérisé par** un mécanisme de réglage (8) selon l'une des revendications 1 à 6.

8. Outil selon la revendication 7, **caractérisé par** plusieurs éléments coupants (4, 6) en liaison avec le premier élément d'ajustement (20 ; 120).

9. Outil selon la revendication 7 ou 8, qui est conçu pour un fonctionnement rotatif.

10. Outil de perçage de précision, comprenant un manche d'outil (2), un élément coupant (4, 6) monté réglable sur le manche d'outil (2 ; 102) et un mécanisme de réglage (8) logé dans le manche d'outil (2 ; 102) et en liaison avec l'élément coupant (4, 6), mécanisme comprenant un premier élément d'ajustement (20 ; 120) piézoélectrique pour ajuster l'élément coupant (4, 6) dans le sens radial du manche d'outil (2 ; 102), **caractérisé par** un mécanisme de retenue (32 ; 132) pour maintenir le premier élément d'ajustement (20 ; 120) dans un état de déformation déterminé.

11. Outil de perçage de précision selon la revendication 10, **caractérisé par** deux éléments coupants (4, 6 ; 104, 106) disposés diamétralement dans deux évidements (16, 18) correspondants sur la circonférence extérieure (12) du manche d'outil (2 ; 102), le premier élément d'ajustement (20 ; 120) étant disposé entre les deux éléments coupants (4, 6).

12. Outil de perçage de précision selon la revendication 10 ou 11, dans lequel le premier élément d'ajustement (20 ; 120) est en liaison directe avec les deux éléments coupants (4, 6 ; 104, 106).

13. Outil de perçage de précision selon l'une des revendications 10 à 12, dans lequel le mécanisme de retenue (32 ; 132) comprend un collier de serrage (32 ; 132) entourant pour l'essentiel le premier élément d'ajustement (20 ; 120) dans son intégralité.

14. Outil de perçage de précision selon la revendication 13, dans lequel le mécanisme de retenue (32 ; 132) comprend un deuxième élément d'ajustement (38 ; 138 ; 138 ; 138) pour déverrouiller le collier de serrage (32 ; 132) et qui disposé entre deux portions d'extrémité (34, 36) libres opposées du collier de serrage (32 ; 132).

15. Outil de perçage de précision selon la revendication 14, dans lequel le premier et le deuxième éléments d'ajustement (20 ; 120, 38 ; 138) peuvent être asservis électriquement indépendamment l'un de l'autre.

16. Outil de perçage de précision selon l'une des revendications 10 à 15, dans lequel le mécanisme de réglage (8) comprend un troisième élément d'ajustement piézoélectrique distancé du premier élément d'ajustement (20, 120) dans le sens axial par rapport au manche d'outil (2) et pouvant être asservi électriquement indépendamment de celui-ci.

17. Outil de perçage de précision selon l'une des revendications 10 à 16, **caractérisé par** un élément de raccordement (30 ; 130) commun prévu par exemple sur le manche d'outil (2 ; 102), de préférence à symétrie de rotation, pour l'asservissement électrique indépendant d'au moins un élément d'ajustement (20 ; 120, 38 ; 138) et du mécanisme de retenue (32 ; 132).

18. Outil de perçage de précision selon l'une des revendications 10 à 17, **caractérisé par** un connecteur mâle (30 ; 170) pour raccorder des conduites d'asservissement électriques (174) destiné à au moins un élément d'ajustement (20 ; 120, 38 ; 138) ou au mécanisme de retenue (32 ; 132).

19. Outil de perçage de précision selon la revendication 18, dans lequel le manche d'outil (102) porte un cône à tige forée (150) qui passe dans une surface annulaire radiale (162) permettant de serrer l'outil, à l'aide d'un accouplement HSK, contre une surface de serrage (164) du support d'outil (broche 156), dans lequel le connecteur mâle (170) se situe dans la surface annulaire radiale (162).

20. Outil de perçage de précision selon l'une des revendications 17 à 19, dans lequel l'élément de raccordement (30 ; 130) commun comprend des bagues collectrices associées à au moins un élément d'ajustement (20 ; 120, 38 ; 138) et au mécanisme de retenue (32 ; 132).

21. Outil de perçage de précision selon l'une des revendications 10 à 20, dans lequel les éléments d'ajustement (20 ; 120) piézoélectriques présentent une plage d'ajustement allant jusqu'à 100 µm pour une résolution inférieure à 0,1 µm et une capacité de charge supérieure à 500 N.
